# EUROPEAN PATENT APPLICATION

(11) **EP 4 694 181 A1**
(43) Date of publication of application: **11.02.2026**
(21) Application number: 23935002.8
(22) Date of filing: 09.11.2023
(51) Int. Cl.: H04Q 11/00

(54) **BANDWIDTH ALLOCATION METHOD AND APPARATUS, AND COMMUNICATION DEVICE AND STORAGE MEDIUM**

(30) Priority: 28.04.2023 CN 202310481777
(71) Applicant: ZTE CORPORATION, Shenzhen, Guangdong 518057 (CN)
(72) Inventor: ZHANG, Weiliang, Shenzhen, Guangdong 518057 (CN); ZHOU, Jiaqi, Shenzhen, Guangdong 518057 (CN); HUANG, Jian, Shenzhen, Guangdong 518057 (CN); ZHANG, Hongxi, Shenzhen, Guangdong 518057 (CN)
(74) Representative: Ziebig Hengelhaupt Intellectual Property Attorneys Patentanwaltskanzlei PartGmbB
(86) International application number: PCT/CN2023/130815
(87) International publication number: WO 2024/221834

(57) **Abstract**

The present application discloses a bandwidth allocation method, apparatus, communication device, and storage medium, and belongs to the technical field of optical network communication. The bandwidth allocation method is applied to an optical line terminal in a passive optical network, and includes: detecting service data characteristics of an upstream periodic service in the passive optical network; wherein the service data characteristics includes at least a service data packet length and a service data period; and allocating a first bandwidth with a length not less than the service data packet length to an optical network unit in the passive optical network according to the service data period, to allow the optical network unit forward service data of the upstream periodic service via the first bandwidth.

## Description

### CROSS-REFERENCE TO RELATED APPLICATIONS

This application claims priority to Chinese Patent Application No. 202310481777.3, filed on April 28, 2023. The disclosure of the above-mentioned application is incorporated herein by reference in their entireties.

### TECHNICAL FIELD

The present application relates to the technical field of optical network communications, and more particularly to a bandwidth allocation method, a bandwidth allocation apparatus, a communication device, and a storage medium.

### BACKGROUND

In a passive optical network, service data is transmitted between the optical line terminal (OLT) and the optical network unit (ONU) via the optical distribution network (ODN). In related art, in the upstream direction, if a user terminal connected to the ONU uploads service data to the ONU but the ONU does not have the corresponding upstream bandwidth at this time, the service data is buffered in the ONU until the ONU has the upstream bandwidth before being sent to the OLT. This is very unfriendly for upstream periodic services in passive optical networks, which are sensitive to latency and jitter.

### SUMMARY

The main purpose of the present application is to provide a bandwidth allocation method, a bandwidth allocation apparatus, a communication device, and a storage medium, which are designed to detect the service data characteristics of upstream periodic services in a passive optical network at the OLT side to accurately allocate bandwidth to ONUs, thereby reducing the buffering time of upstream periodic services in the ONUs.

To achieve the above purpose, embodiments of the present application provide a bandwidth allocation method, applied to an optical line terminal in a passive optical network. The bandwidth allocation method includes:
detecting service data characteristics of an upstream periodic service in the passive optical network; the service data characteristics includes at least a service data packet length and a service data period; and
allocating a first bandwidth with a length not less than the service data packet length to an optical network unit in the passive optical network according to the service data period, to allow the optical network unit forward service data of the upstream periodic service via the first bandwidth.

In addition, embodiments of the present application further provide a bandwidth allocation apparatus applied to an optical line terminal in a passive optical network. The bandwidth allocation apparatus includes:
a data detection module configured to detect service data characteristics of an upstream periodic service in the passive optical network; the service data characteristics includes at least a service data packet length and a service data period; and
a bandwidth allocation module configured to allocate a first bandwidth with a length not less than the service data packet length to an optical network unit in the passive optical network according to the service data period, to allow the optical network unit forward service data of the upstream periodic service via the first bandwidth.

When executed, the functional modules of the bandwidth allocation apparatus implement the bandwidth allocation method as described above.

Furthermore, embodiments of the present application provide a communication device including: the bandwidth allocation apparatus as described above, a memory, a processor, and a computer program stored in the memory and executable on the processor, the computer program configured to implement the bandwidth allocation method as described above.

Furthermore, embodiments of the present application provide a storage medium, the storage medium is a computer-readable storage medium, and a computer program is stored on the storage medium; the bandwidth allocation method as described above is implemented when the computer program is executed by a processor.

### BRIEF DESCRIPTION OF THE DRAWINGS

FIG. 1 is a structural schematic view of an operating device of hardware operating environment involved in an embodiment of the present application.
FIG. 2 is a flowchart of steps of a bandwidth allocation method in a first embodiment of implementations of the present application.
FIG. 3a and FIG. 3b are both schematic views of industrial control based on a passive optical network involved in an embodiment of implementations of the present application.
FIG. 4 is a schematic view of a data transmission scenario involved in an embodiment of implementations of the present application.
FIG. 5 is a schematic view of another data transmission scenario involved in an embodiment of implementations of the present application.
FIG. 6 is a schematic view of a time matching relationship between bandwidth allocation and service data involved in an embodiment of implementations of the present application.
FIG. 7 is a schematic view of a precise time expression when data arrives at the OLT and ONU involved in an embodiment of implementations of the present application.
FIG. 8 is a schematic view of an application process for detecting service data characteristics involved in an embodiment of implementations of the present application.
FIG. 9 is a structural schematic view of a bandwidth allocation apparatus provided by implementations of the present application.

The purpose, features and advantages of the present application will be further explained with reference to the accompanying drawings and embodiments.

### DETAILED DESCRIPTION OF THE EMBODIMENTS

It should be understood that the specific embodiments described here are only used to explain the present application and are not used to limit the present application.

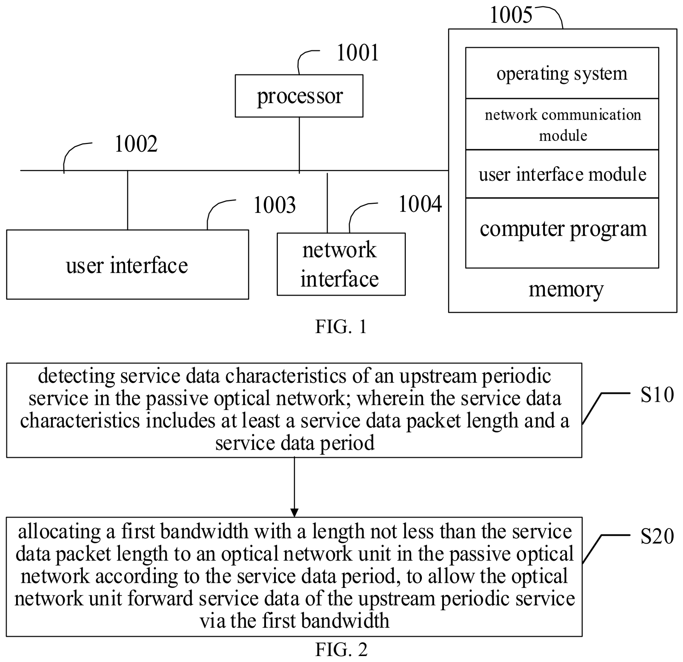

Referring to FIG. 1, which is a structural schematic view of an operating device of hardware operating environment involved in an embodiment of the present application.

In this embodiment, the operating device of the hardware operating environment involved in the embodiments of the present application may be a communication device including a bandwidth allocation apparatus. Specifically, the communication device may be an optical line terminal (OLT). The OLT implements a dynamic bandwidth allocation mechanism (DBA) within a passive optical network to allocate bandwidth to one or more optical network units (ONUs) in the passive optical network, to allow the ONUs forward service data of upstream periodic services to the OLT based on the allocated bandwidth.

As shown in FIG. 1, the operating device may include: a processor 1001, such as a Central Processing Unit (CPU), a communication bus 1002, user interface 1003, a network interface 1004 and a memory 1005. The communication bus 1002 is configured to realize connection communication among these components. The user interface 1003 may include a display and an input unit such as a keyboard. The user interface 1003 may further include a standard wired interface or a wireless interface. The network interface 1004 may include a standard wired interface or a wireless interface (such as a Wireless-Fidelity (Wi-Fi) interface). The memory 1005 may be a high-speed random access memory (RAM), or a stable non-volatile memory (NVM), such as a disk memory. The memory 1005 may further be a storage device independent of the aforementioned processor 1001.

Those skilled in the art can understand that the structure shown in FIG. 1 does not constitute a limitation on the operating device, and may include more or less components than shown in the figure, or combine certain components, or arrange different components.

As shown in FIG. 1, the memory 1005 identified as a computer storage medium may include an operating system, a data storage module, a network communication module, a user interface module, and a computer program.

In the operating device shown in FIG. 1, the network interface 1004 is primarily used for data communication with other devices; the user interface 1003 is primarily used for data interaction with a user. The processor 1001 and memory 1005 in the operating device of the present application may be disposed in the operating device. The operating device invokes a computer program stored in the memory 1005 via the processor 1001 and performs the following operations:
detecting service data characteristics of an upstream periodic service in the passive optical network; the service data characteristics includes at least a service data packet length and a service data period; and
allocating a first bandwidth with a length not less than the service data packet length to an optical network unit in the passive optical network according to the service data period, to allow the optical network unit forward service data of the upstream periodic service via the first bandwidth.

In an embodiment, the service data characteristics further include a data arrival time of the service data arriving at the optical network unit. The processor 1001 may invoke a computer program stored in the memory 1005 to further perform the following operations:
allocating the first bandwidth to the optical network unit according to the service data period at a time T prior to the data arrival time.

In an embodiment, the data arrival time includes: a first arrival time in response to the optical line terminal receiving the service data, or a second arrival time in response to the service data arriving at the optical network unit, and the time T includes time T0 and time T1. The processor 1001 may invoke a computer program stored in the memory 1005 to further perform the following operations:
allocating the first bandwidth to the optical network unit at the time T0 before the first arrival time, or allocating the first bandwidth to the optical network unit at the time T1 before the second arrival time, the time T0 is equal to the sum of the T1 time and a data transmission duration between the optical line terminal and the optical network unit

In an embodiment, the processor 1001 may invoke a computer program stored in memory 1005 to further perform the following operations:
allocating a second bandwidth to the optical network unit in the passive optical network;
receiving an uplink burst sent by the optical network unit via the second bandwidth; and
determining the service data characteristics according to the service data of the uplink periodic service carried in the uplink burst.

In an embodiment, the service data characteristics further include: a first arrival time in response to the optical line terminal receiving the service data, or a second arrival time in response to the service data arriving at the optical network unit The processor 1001 may invoke a computer program stored in the memory 1005 to further perform the following operations:
parsing the service data to determine the service data packet length of the service data, and obtaining a number of service data of the service data received;
detecting whether there is idle data preceding the service data in the uplink burst;
in response to detecting the idle data, determining at least two first arrival times according to the idle data, or determining at least two second arrival times according to the idle data; and
determining the service data period of the service data according to the number of service data and the two first arrival times, or determining the service data period of the service data according to the number of service data and the two second arrival times.

In an embodiment, the processor 1001 may invoke a computer program stored in the memory 1005 to further perform the following operations:
in response to that the service data carried in the uplink burst is detected to be incomplete, combining the uplink burst with a newly received uplink burst; and
determining the number of service data and the service data packet length according to the service data carried in the combined uplink burst.

In an embodiment, processor 1001 may invoke a computer program stored in memory 1005 and further perform the following operations:
allocating the second bandwidth to the optical network unit multiple times within a preset duration;
   or,
allocating the second bandwidth to the optical network unit at a preset location centrally.

Based on the operating device structure of the hardware operating environment described in the embodiments of the present application, the overall concept of the bandwidth allocation method provided by the embodiments of the present application is proposed.

A passive optical network is a point-to-point or point-to-multipoint network generally consisting of an optical line terminal (OLT), an optical distribution network (ODN), and at least one optical network unit (ONU). In this passive optical network, data downlink uses a natural broadcast method. That is, information and services sent by the OLT via broadcast are received by all ONUs, and each ONU filters and receives the information. In the data upstream direction, if a user terminal connected to an optical network unit uploads service data to the optical network unit, but the optical network unit lacks the corresponding upstream bandwidth at this time, the service data will be buffered in the optical network unit until the optical network unit has the upstream bandwidth before being sent to the optical line terminal. This is very unfriendly to upstream periodic services in passive optical networks, which are sensitive to latency and jitter.

In response to the situation where the data upstream direction in a passive optical network is unfriendly to upstream periodic services, an embodiment of the present application proposes a bandwidth allocation method. Through the optical line terminal in the passive optical network, collecting the service data characteristics of the upstream periodic service on the local side, and then allocating the upstream bandwidth to the optical network unit based on the collected service data characteristics. Therefore, after the upstream periodic service data sent by the terminal device connected to the optical network unit reaches the optical network unit, the optical network unit can forward it via the upstream bandwidth allocated by the optical line terminal. In this embodiment, the OLT identifies the service characteristics and completes the bandwidth allocation, realizing zero-delay or low-delay forwarding from the ONU to the OLT.

Therefore, compared to related technologies, the embodiments of the present application detect the service data characteristics of upstream periodic services in a passive optical network at the OLT optical line terminal to accurately allocate bandwidth to the ONU optical network unit. The ONU optical network unit is able to forward the service data of the upstream periodic service with no delay or low delay, thereby reducing the cache time of the upstream periodic service in the ONU optical network unit.

Based on the overall concept of the bandwidth allocation method provided in the embodiments of the present application, various embodiments of the bandwidth allocation method are further proposed.

The bandwidth allocation method provided in the present application is applied to the aforementioned operating device. The operating device can be a communications device including a bandwidth allocation apparatus, or an OLT optical line terminal in the passive optical network. It should be understood that, based on the varying design requirements of actual applications, in various feasible embodiments, the bandwidth allocation method provided by the present application can certainly be applied to other terminal devices. However, for ease of understanding and illustration of the technical solution, the following text uses the OLT optical line terminal as the execution subject of the scheme to illustrate the bandwidth allocation method provided by the present application.

Referring to FIG. 2, which is a flowchart of steps of a bandwidth allocation method in a first embodiment of implementations of the present application. Although the flowchart illustrates a logical order, in certain circumstances, the bandwidth allocation method provided herein may execute the steps in a different order than that shown or described.

As shown in FIG. 2, in a first embodiment of the implementations of the present application, a bandwidth allocation method provided herein may include the following steps.

Step S10: detecting service data characteristics of an upstream periodic service in the passive optical network; the service data characteristics includes at least a service data packet length and a service data period.

In this embodiment, when the OLT optical line terminal detects that the ONU optical network unit is forwarding an upstream periodic service to it in the passive optical network where the OLT optical line terminal is located, it immediately detects the service data characteristics of the upstream periodic service, thereby obtaining the service data characteristics including at least the service data packet length and the service data period.

In this embodiment and other feasible embodiments, among the service data characteristics detected by the OLT optical line terminal, the service data packet length is detected and obtained by the OLT optical line terminal during the entire detection process. During the entire detection process, if the OLT optical line terminal detects that multiple service data packets have the same packet length, the OLT optical line terminal may use the packet length of any detected service data as the service data packet length. If the OLT optical line terminal detects that the packet lengths of multiple service data packets are different, the OLT optical line terminal may use the largest packet length among the packet lengths of the multiple detected service data packets as the maximum service data packet length.

In addition, the service data period in the service data characteristics detected by the OLT optical line terminal is used to indicate that in the service data forwarding from the ONU optical network unit to the OLT optical line terminal, the transmission time interval between any two adjacent service data is equal, that is, the ONU optical network unit sends service data to the OLT optical line terminal periodically. It should be understood that due to jitter in the transmission process of service data in the passive optical network, there may be a certain error between two adjacent service data periods detected by the OLT optical line terminal. At this time, as long as the errors between the service data periods detected by the OLT optical line terminal do not exceed the predetermined error allowable range (the specific size can be set based on the actual application), the OLT optical line terminal can calculate the average value of multiple periods as the service data period in the currently detected service data characteristics.

Step S20, allocating a first bandwidth with a length not less than the service data packet length to an optical network unit in the passive optical network according to the service data period, to allow the optical network unit forward service data of the upstream periodic service via the first bandwidth.

In this embodiment, after detecting and obtaining the service data characteristics including at least the service data packet length and the service data period, the OLT optical line terminal can allocate a first bandwidth having a length greater than or equal to the service data packet length to one or more ONU optical network units in the currently located passive optical network according to the service data period. Thus, after receiving the first bandwidth allocated by the OLT optical line terminal in the current passive optical network, the ONU optical network unit can use the first bandwidth to instantly forward subsequently received upstream periodic service data to the OLT optical line terminal with zero latency or low latency.

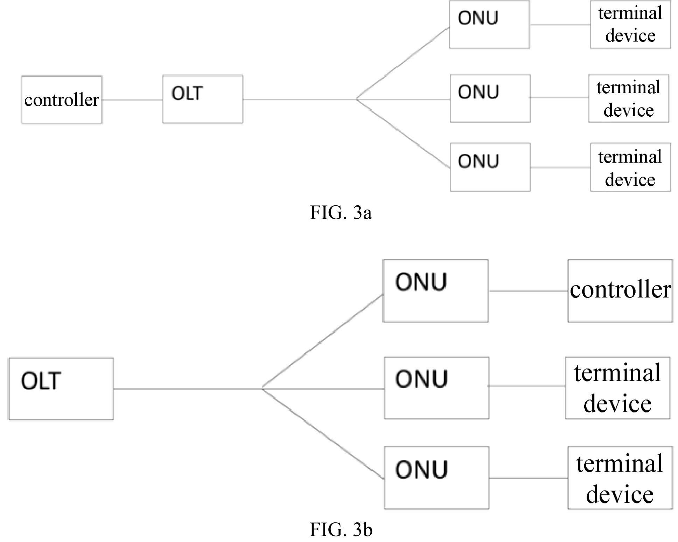

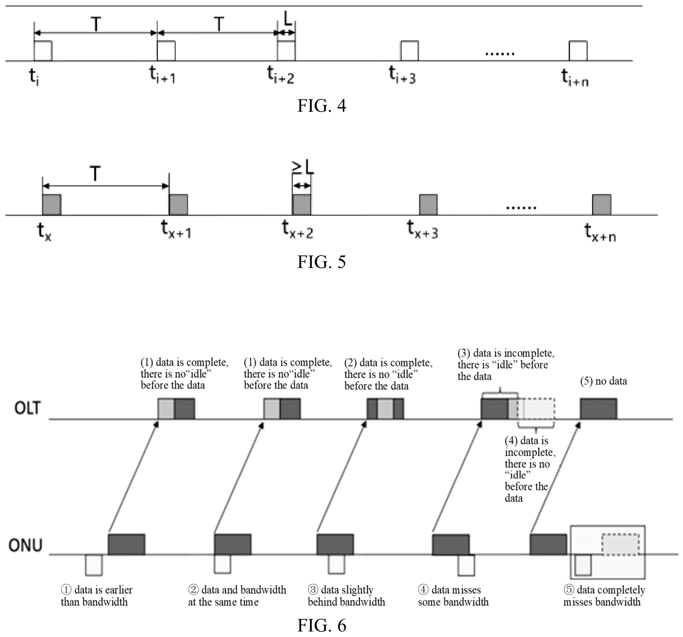

In this embodiment and other feasible embodiments, passive optical networks in industrial control applications, such as those shown in FIG. 3a and FIG. 3b, typically involve the transmission of upstream periodic services. Specifically, a controller sends periodic instructions to a terminal device via the passive optical network, and the terminal device then executes upstream periodic service operations based on the instructions and sends periodic status or execution confirmation information to the controller. In this scenario, the service data of upstream periodic service is transmitted according to the scenario shown in FIG. 4. As shown in FIG. 4, upstream periodic services include but are not limited to the following service data characteristics.
1. The service data transmission rate is fixed.
2. The interval between any two adjacent service data transmissions is the same, which is T, where T is the service data period.
3. The location of the service data is fixed. That is, when the ONU optical network unit begins to send service data to the OLT optical line terminal, the time at which it sends the service data on the timeline is fixed, and ti represents the sending location of the i-th service data.
4. The packet length of service data sent by the ONU optical network unit each time is the same, which is L, where L is the service data packet length. The packet length of service data sent by the ONU optical network unit each time is not exceed L.
5. Service data occupies T-CONT (Transmission Container, the carrier that carries services in the upstream direction of the GPON). That is, all service data of upstream periodic service sent by the ONU optical network unit to the OLT optical line terminal is sent via the specific T-CONT, and the T-CONT does not carry other service data.

However, in actual operation, the controller and terminal devices are systems independent of the passive optical network, each of which only transmits relevant control information via the passive optical network. Consequently, the passive optical network cannot obtain information such as the accurate service data period T and the service data transmission location ti. Furthermore, because service data is subject to jitter during transmission within a passive optical network, which requires the OLT optical line terminal in the passive optical network to tolerate service jitter when allocating bandwidth to the ONU optical network unit.

Based on this, the bandwidth allocation method provided in embodiments of the present application detects the service data characteristics of the upstream periodic service based on the OLT optical line terminal, thereby allocating bandwidth to the ONU optical network unit when forwarding the service data of upstream periodic service, thus further avoiding caching service data within the ONU optical network unit, which increases costs.

In an embodiment, as shown in FIG. 5, the bandwidth allocation method provided in this embodiment of the present application uses the OLT optical line terminal to detect service data characteristics of the aforementioned upstream periodic service: service data period T, the transmission location tx of any service data, and service data packet length L. The OLT optical line terminal then forwards the service data of the upstream periodic service to the ONU optical network unit based on each identified service data characteristics and allocates bandwidth. That is, starting from the transmission location tx, the ONU optical network unit is allocated a bandwidth not less than the service data packet length L for each service data period T. In this way, it can allow the ONU optical network unit to forward the data of the upstream periodic service to the OLT optical line terminal with minimal delay and minimal jitter without wasting bandwidth.

For example, as shown in FIG. 3a, in application scenarios such as industrial control, a controller connected to a passive optical network periodically sends execution commands to terminal devices, and the terminal devices periodically send execution replies and status reports to the controller. At this time, service data needs to be periodically sent from the terminal devices to the controller, and these periodic service data need to be transmitted in the upstream direction from the ONU optical network unit to the OLT optical line terminal. During the service startup phase, a trial run and learning process is required, that is, the controller and terminal devices send services in their own ways; in the upstream direction, the ONU optical network unit also sends services in its own way. The OLT optical line terminal detects the service data sent by the terminal device through the ONU optical network unit to obtain the service data characteristics of the upstream periodic service. The OLT optical line terminal then allocates upstream bandwidth to the ONU optical network unit based on the acquired service data characteristics to complete the learning and trial run. Ultimately, after the service data of the upstream periodic service sent by the terminal device reaches the ONU optical network unit, the ONU optical network unit can send the service data to the OLT optical line terminal through the upstream bandwidth allocated to the ONU optical network unit by the OLT optical line terminal, and the OLT optical line terminal then sends the service data to the controller.

In addition, as shown in FIG. 3b, in application scenarios such as industrial control, a controller connected to a passive optical network periodically sends execution commands to terminal devices, and the terminal devices periodically send execution replies and status reports to the controller. At this time, service data needs to be periodically sent from the terminal devices to the controller, and these periodic service data also need to be transmitted in the upstream direction from the ONU optical network unit to the OLT optical line terminal and then to other ONU optical network units. During the service startup phase, a trial run and learning process is required, that is, the controller and terminal devices send services in their own ways; in the upstream direction, the ONU optical network unit also sends services in its own way. The OLT optical line terminal detects the service data sent by the terminal device through the ONU optical network unit to obtain the service data characteristics of the upstream periodic service. The OLT optical line terminal then allocates upstream bandwidth to the ONU optical network unit based on the acquired service data characteristics to complete the learning and trial run. Ultimately, after the service data of the upstream periodic service sent by the terminal device reaches the ONU optical network unit, the ONU optical network unit can send the service data to the OLT optical line terminal through the upstream bandwidth allocated to the ONU optical network unit by the OLT optical line terminal, and the OLT optical line terminal then sends the service data to the controller.

In this embodiment, the bandwidth allocation method provided by the embodiment of the present application, when an OLT optical line terminal detects that an ONU optical network unit forwards an upstream periodic service to it in a passive optical network in which it is located, immediately detects service data characteristics of the upstream periodic service, thereby obtaining service data characteristics including at least service data packet length and service data period. Afterwards, the OLT optical line terminal allocates a first bandwidth whose length is greater than or equal to the service data packet length to one or more ONU optical network units in the currently located passive optical network according to the service data period. Thus, after receiving the first bandwidth allocated by the OLT optical line terminal in the current passive optical network, the ONU optical network unit can use the first bandwidth to instantly forward subsequently received upstream periodic service data to the OLT optical line terminal with zero latency or low latency.

Therefore, compared to related technologies, the embodiments of the present application detect the service data characteristics of upstream periodic services in a passive optical network at the OLT optical line terminal to accurately allocate bandwidth to the ONU optical network unit. The ONU optical network unit is able to forward the service data of the upstream periodic service with no delay or low delay, thereby reducing the cache time of the upstream periodic service in the ONU optical network unit.

In other feasible embodiments, the bandwidth allocation method provided in the embodiments of the present application can also adjust the first bandwidth periodically allocated to the ONU optical network unit through the OLT optical line terminal according to the situation of the service data sent by the ONU optical network unit in the uplink burst (whether there is idle data before and after the service data). For example, when the OLT optical line terminal is allocating the first bandwidth to the ONU optical network unit, if the allocated first bandwidth is greater than the aforementioned service data packet length, there will be idle data before the service data in the uplink burst, thus meeting the requirement. However, if the allocated first bandwidth is equal to the service data packet length, at this time, if the allocation position tx of the first bandwidth is further adjusted forward or backward, it will result in that incomplete service data packets appears in the uplink burst; at this time, the OLT optical line terminal needs to back off and stop adjusting.

Based on the first embodiment of the implementations of the present application described above, a second embodiment of the implementations of the present application is proposed.

In the second embodiment of the present application, the service data characteristics of the upstream periodic service detected by the aforementioned OLT optical line terminal further include: a data arrival time of the service data arriving at the ONU optical network unit, or a data arrival time of the service data arriving at the OLT optical line terminal. Based on this, in the bandwidth allocation method provided by the present application, the OLT optical line terminal allocates the first bandwidth to the ONU optical network unit according to the service data period, which may include:
allocating the first bandwidth to the optical network unit according to the service data period at a time T prior to the data arrival time.

In this embodiment, when the OLT optical line terminal detects the service data characteristics of the aforementioned upstream periodic service, in addition to detecting the aforementioned service data packet length L and the service data period T, the OLT optical line terminal further detects the data arrival time of the service data included in the service data characteristics at the ONU optical network unit, and/or detects the data arrival time of the service data at the OLT optical line terminal. In this way, when the OLT optical line terminal allocates a first bandwidth having a length greater than or equal to the service data packet length L to one or more ONU optical network units in the currently located passive optical network according to the service data period T, that is, specifically, the first bandwidth may be allocated to the one or more ONU optical network units at time T before the data arrival time within each service data period T.

In some feasible embodiments, among the data arrival times detected by the aforementioned OLT optical line terminal, the data arrival time in response to the optical line terminal receiving the service data is the first arrival time, and the data arrival time in response to the service data arriving at the optical network unit is the second arrival time. The second arrival time of the service data arriving at the ONU optical network unit is obtained by subtracting the data transmission duration between the ONU optical network unit and the OLT optical line terminal from the first arrival time of the service data arriving at the OLT optical line terminal. Furthermore, the aforementioned time T includes time T0 and time T1 correspondingly, and the time T0 is equal to the sum of the T1 time and data transmission duration between the optical line terminal and the optical network unit.

Based on this, the aforementioned OLT optical line terminal allocates the first bandwidth to the ONU optical network unit at time T before the data arrival time, which may include:
allocating the first bandwidth to the optical network unit at the time T0 before the first arrival time, or allocating the first bandwidth to the optical network unit at the time T1 before the second arrival time.

In this embodiment, if the data arrival time detected by the OLT optical line terminal is the first arrival time of the service data received by the OLT optical line terminal, then when the OLT optical line terminal allocates a first bandwidth having a length greater than or equal to the service data packet length L to one or more ONU optical network units in the currently located passive optical network according to the service data period T, that is, specifically within each service data period T, at time T0 before the first arrival time, allocating the first bandwidth to the one or more ONU optical network units.

If the data arrival time detected by the OLT optical line terminal is the data arrival time of the service data arriving at the ONU optical network unit, which is the second arrival time, the OLT optical line terminal allocates a first bandwidth having a length greater than or equal to the service data packet length L to one or more ONU optical network units in the currently located passive optical network according to the service data period T, that is, specifically within each service data period T, at time T1 before the second arrival time, allocating the first bandwidth to the one or more ONU optical network units.

In this embodiment, the bandwidth allocation method provided by the present application, when detecting the service data characteristics of the aforementioned upstream periodic service through the OLT optical line terminal, in addition to detecting the aforementioned service data packet length L and service data period T, the OLT optical line terminal also detects the data arrival time of the service data included in the service data characteristics arriving at the ONU optical network unit, and/or detects the data arrival time of the service data arriving at the OLT optical line terminal. In this way, when the OLT optical line terminal allocates a first bandwidth with a length greater than or equal to the service data packet length L to one or more ONU optical network units in the currently located passive optical network according to the service data period T, that is, specifically within each service data period T, at time T before the data arrival time, allocating the first bandwidth with a length greater than or equal to the service data packet length L to the one or more ONU optical network units.

Therefore, the bandwidth allocation method provided in the present application ensures that the time when the first bandwidth is allocated to one or more ONU optical network units is earlier than the time when the service data of the upstream periodic service reaches the ONU optical network unit. Furthermore, after receiving the first bandwidth allocated by the OLT optical line terminal, the ONU optical network unit can use the first bandwidth to immediately forward the service data of the subsequently received upstream periodic service to the OLT optical line terminal with zero latency or low latency.

Based on the first and/or second embodiments of the present application, a third embodiment of the present application is proposed.

In the third embodiment of the application embodiment, the step of "detecting the service data characteristics of the upstream periodic service in the passive optical network" in the aforementioned step S10 may include:
allocating a second bandwidth to the optical network unit in the passive optical network;
receiving an uplink burst sent by the optical network unit via the second bandwidth; and
determining the service data characteristics according to the service data of the uplink periodic service carried in the uplink burst.

In this embodiment, the OLT optical line terminal allocates a second bandwidth specifically for detecting the aforementioned service data characteristics to the ONU optical network unit in the passive optical network in which it is located. The ONU optical network unit then uses the second bandwidth to send an uplink burst to the OLT optical line terminal. The OLT optical line terminal then receives the uplink burst and inspects the data in the uplink burst, thereby determining and obtaining the aforementioned service data characteristics, such as the service data period T and the service data length L, according to the service data of the upstream periodic service carried in the uplink burst.

In this embodiment and other feasible embodiments, when the ONU optical network unit transmits an uplink burst to the OLT optical line terminal using the second bandwidth, the upstream periodic service is carried in a designated T-CONT carrier, thereby transmitting the T-CONT carrier to the OLT optical line terminal using the second bandwidth.

In some feasible embodiments, after receiving the uplink burst sent by the ONU optical network unit using the second bandwidth, the OLT optical line terminal automatically detects the upstream periodic service carried in the uplink burst to obtain the each service data characteristics mentioned above.

Based on this, the aforementioned OLT optical line terminal determines the service data characteristics according to the service data carried in the uplink burst, which may include:
parsing the service data to determine the service data packet length of the service data, and obtaining a number of service data of the service data received;
detecting whether there is idle data preceding the service data in the uplink burst;
in response to detecting the idle data, determining at least two first arrival times according to the idle data, or determining at least two second arrival times according to the idle data; and
determining the service data period of the service data according to the number of service data and the two first arrival times, or determining the service data period of the service data according to the number of service data and the two second arrival times.

In this embodiment, after receiving an uplink burst transmitted by an ONU optical network unit using the second bandwidth, the OLT optical line terminal immediately and automatically extracts the upstream periodic service from a designated T-CONT carrier, then parses the service data of the upstream periodic service to determine the service data packet length L. Furthermore, the OLT optical line terminal can count the number of service data of all service data received during the current detection phase according to the service data packet length L. At this time, the OLT optical line terminal can further roughly evaluate the service data period T.

Furthermore, the OLT optical line terminal can also synchronously or asynchronously detect whether there is idle data "idle" preceding the service data in the received uplink burst during the detection phase. Therefore, in the situation that the idle data "idle" is detected before the service data, the OLT optical line terminal can determine that the service data is not cached on the ONU optical network unit. Furthermore, combined with the data transmission duration between the OLT optical line terminal and the ONU optical network unit, the OLT optical line terminal can determine and obtain the first arrival time of the service data arriving at the OLT optical line terminal and/or the second arrival time of the service data arriving at the OLT optical line terminal.

Then, after respectively determining the two first arrival times or the two second arrival times according to the same operation described above, the OLT optical line terminal further uses the two first arrival times to perform a period calculation, thereby determining and obtaining the accurate service data period T of the service data of the upstream periodic service. Or, further using the two second arrival times to perform period calculation to determine and obtain an accurate service data period T.

Referring to FIG. 6, in FIG. 6, " 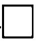 " represents service data, " 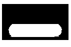 " and " 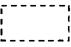 " represent bandwidth, and " 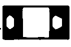 " and " 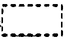 " represent uplink bursts. In this embodiment and other feasible embodiments, if the time when bandwidth is allocated and arrives at the ONU optical network unit is not earlier than the time when the service data arrives at the ONU optical network unit, the service data will typically be cached within the ONU optical network unit for a certain period of time. Consequently, when the service data is subsequently transmitted by the ONU optical network unit via an uplink burst to the OLT optical line terminal, there will be no idle data "idle" preceding the service data in the uplink burst. If the time when the allocated bandwidth is allocated to arrive at the ONU optical network unit (ONU) is earlier than the time when the service data arrives at the ONU optical network unit, the service data will not be cached in the ONU optical network unit. Consequently, when the service data arrives at the OLT optical line terminal via an uplink burst, there will be the "idle" preceding the service data in the uplink burst. Based on this, the OLT optical line terminal can use the feature that if there is idle data "idle" before the service data in the received uplink burst, it means that the service data is not cached in the ONU optical network unit, in combination with the data transmission duration between the OLT optical line terminal and the ONU optical network unit, to obtain the precise location where the service data arrives at the ONU optical network unit.

In some feasible embodiments, the bandwidth allocation method provided in the embodiments of the present application may further include:
in response to that the service data carried in the uplink burst is detected to be incomplete, combining the uplink burst with a newly received uplink burst; and
determining the number of service data and the service data packet length according to the service data carried in the combined uplink burst.

In this embodiment, the aforementioned OLT optical line terminal detects whether there is idle data preceding the service data in a received uplink burst, the presence of idle data preceding the service data indicates that the service data is not cached in the ONU optical network unit, thus determining the time when the service data arrives at the OLT optical line terminal or the ONU optical network unit, and the integrity of the service data in the uplink burst does not need to be ensured. However, if it needs to detect and determine the service data length L of the service data and count the service data, it is necessary to ensure that the service data is complete before parsing and confirming it. In this way, if the OLT optical line terminal detects that the service data written in the currently received uplink burst is incomplete, the OLT optical line terminal can combine the current uplink burst with an adjacent new uplink burst received at the next moment and also sent by the ONU optical network unit. Therefore, the OLT optical line terminal can parse the complete service data contained in the combined uplink burst to determine the service data length L of the complete service data and count the complete service data received.

For example, as shown in FIG. 6 and the following table.

| Case | Example (" 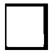 " is the data part, " 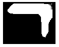 " is the idle part) | Detailed description | Identify data related information |
|---|---|---|---|
| (1) | 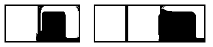 | Data is complete, there is no "idle" before the data | Length, count |
| (2) | 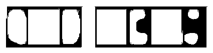 | Data is complete, there is "idle" before the data | Length, count, position |
| | | | Combined with other (2) or (3), identify the period according to the number of device data |
| (3) | 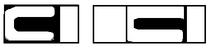 | Data is incomplete, there is "idle" before the data | Position |
| | | | Combined with other (2) or (3), identify the period according to the number of device data |
| | | | Combined with the subsequent (4) to identify the length and count |
| (4) | 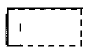 | Data is incomplete, there is no "idle" before the data | Combined with the previous (3) to identify the length and count |
| (5) | 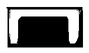 | No data | Exclude data position |

The OLT optical line terminal detects whether there is idle data "idle" before the received service data of the uplink burst, which may be the following cases. In the first case (1), the OLT optical line terminal detects that there is no idle data "idle" before the service data in the uplink burst. At this time, the OLT optical line terminal cannot determine whether the service data has been cached in the ONU optical network unit. However, at this time, the OLT optical line terminal can still obtain the service data length L by parsing the service data, and can count the received service data. In addition, in the second case (2), in addition to obtaining the service data length L and counting the received service data, the OLT optical line terminal can also determine the precise time when the service data arrives at the OLT optical line terminal and obtain the aforementioned first arrival time because there is idle data before the service data in the uplink burst. In the third case (3), since the service data is not sent completely, the OLT optical line terminal can obtain the first arrival time, but it needs to combine the currently received uplink burst with the subsequent received new uplink burst to parse the complete service data to obtain the service data length L and count the received complete service data after confirming that the complete service data has been received.

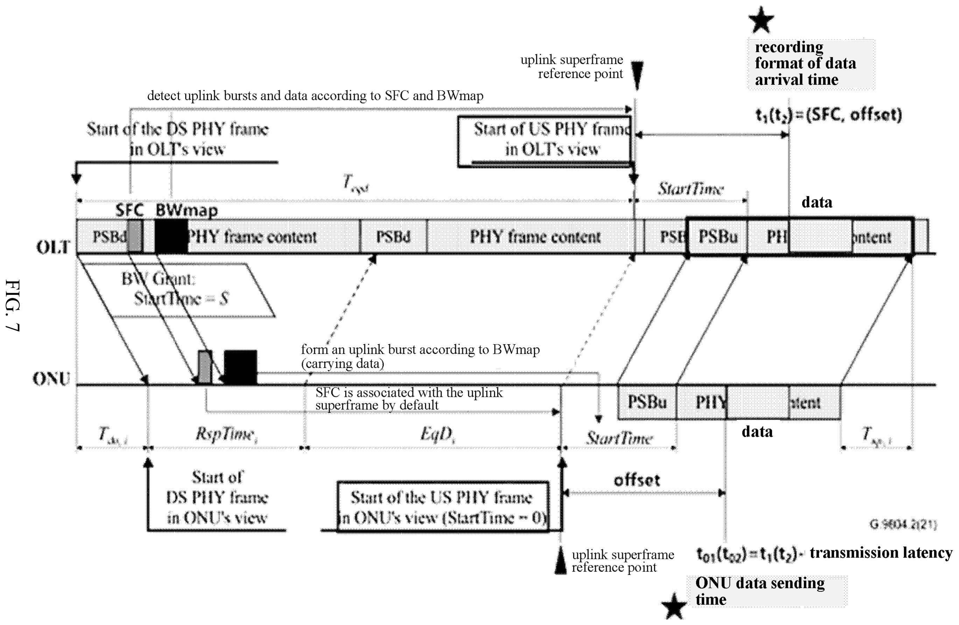

As shown in FIG. 7, the bandwidth allocated by the OLT optical line terminal to the ONU optical network unit is carried in a superframe and transmitted to the ONU optical network unit. A superframe has a superframe number. Each ONU optical network unit has a logical uplink start time upon receiving the superframe. This start time also has a corresponding reference time when it reaches the OLT optical line terminal after transmission. This reference time is related to the superframe number. Therefore, the distance from the start time when the service data is sent by the ONU optical network unit using bandwidth allocation to this reference point, combined with the reference point, can uniquely represent the first arrival time of the service data arriving at the OLT optical line terminal. The second arrival time of the service data arriving at the ONU optical network unit is obtained by subtracting the fiber transmission time between the OLT optical line terminal and the ONU optical network unit from this first arrival time.

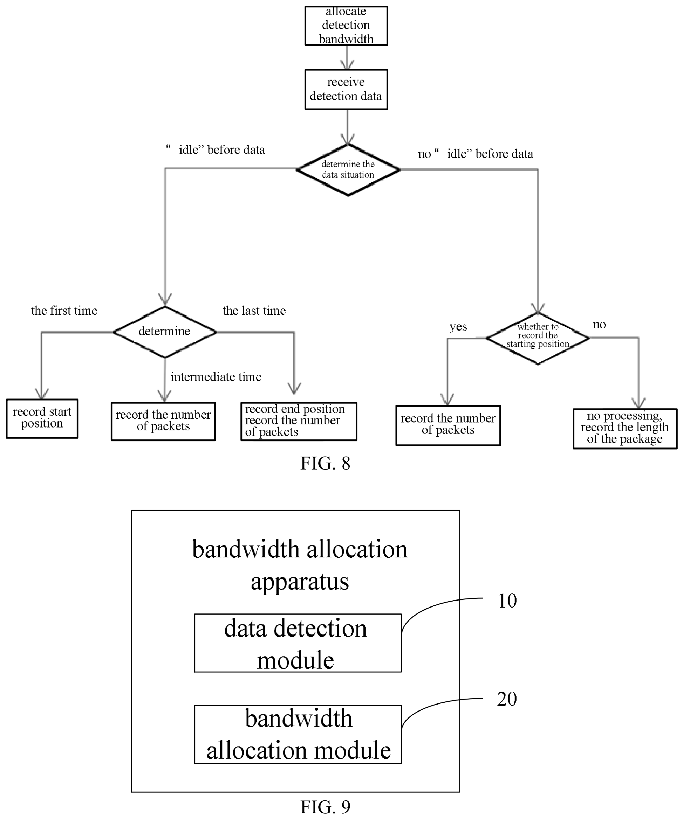

In this embodiment, as shown in the application process of FIG. 8, the bandwidth allocation method provided in the embodiment of the present application allocates a second bandwidth specifically for detection to a designated zero-wait T-CONT carrier on the ONU optical network unit according to a certain strategy during the detection phase through the OLT optical line terminal, thereby receiving an uplink burst sent by the ONU optical network unit using the second single bandwidth, and further checking the service data in the uplink burst. Thus, if the OLT optical line terminal detects the second case (2) or the third case (3) mentioned above when detecting whether there is idle data "idle" before the received service data of the uplink burst, the OLT optical line terminal can identify and record the initial position t1, and start counting the number of service data received subsequently; and if the OLT optical line terminal detects other cases, the OLT optical line terminal can parse and identify the service data length L of the service data, count the number of received service data, and roughly estimate the service data period T. In addition, the OLT optical line terminal can continue to check the received uplink burst until it continues to detect the second case (2) or the third case (3), and further identify and record the end position t2; and if the OLT optical line terminal still detects other cases, that is, the cumulative number of service data received is n (at this time, the OLT optical line terminal is allowed to skip several second cases (2) or third cases (3)). After that, the OLT optical line terminal can calculate according to the formula T=(t2-t1)/(n+1) or T=(t2-t1)/n to obtain the accurate service data period T when the ONU optical network unit forwards the upstream periodic service to the OLT optical line terminal.

In this embodiment and other feasible embodiments, when an OLT optical line terminal records the number of received service data, if the OLT optical line terminal begins counting the number of service data from the moment it detects a data packet (service data) with a start time, and continues counting until it reaches a data packet before the end time, the number of service data ultimately counted by the OLT optical line terminal is n. At this time, the OLT optical line terminal calculates the service data period T according to the formula T=(t2-t1)/n. If the OLT optical line terminal begins counting only when a data packet after the data packet with the start time is detected, and continues counting until it reaches a data packet before the end time, the number of service data ultimately counted by the OLT optical line terminal is n+1. At this time, the OLT optical line terminal calculates the service data period T according to the formula T=(t2-t1)/ (n+1) .

Afterwards, the OLT optical line terminal can allocate the first bandwidth to the zero-wait T-CONT carrier of the ONU optical network unit in the current passive optical network according to the service data length L, based on the time when the ONU optical network unit sends the service book derived from t1 or t2 and the fiber transmission time (the data transmission duration between the ONU optical network unit and the OLT optical line terminal), and the accurate service data period T.

Therefore, compared to related technologies, the embodiments of the present application detect the service data characteristics of upstream periodic services in a passive optical network at the OLT optical line terminal to accurately allocate bandwidth to the ONU optical network unit. The ONU optical network unit is able to forward the service data of the upstream periodic service with no delay or low delay, thereby reducing the cache time of the upstream periodic service in the ONU optical network unit.

Based on the aforementioned first embodiment, second embodiment, and/or third embodiment of the present application, a fourth embodiment of the present application is proposed.

In a fourth embodiment of the present application, the present application provides a bandwidth allocation method, the OLT optical line terminal allocates the second bandwidth specifically for detection to the optical network unit, which may include:
allocating the second bandwidth to the optical network unit multiple times within a preset duration;
   or,
allocating the second bandwidth to the optical network unit at a preset location centrally.

In this embodiment, during the detection phase, the OLT optical line terminal may allocate all available bandwidth as the second bandwidth to the ONU optical network unit. Furthermore, during this process, the OLT optical line terminal may allocate the second bandwidth to the ONU optical network unit multiple times in a dispersed manner within the preset duration. Or, the OLT optical line terminal may, in the situation that the possible service data transmission location of the upstream periodic service has been estimated, centrally allocate the second bandwidth to the ONU optical network unit at that transmission location.

For example, the strategy for the OLT optical line terminal to allocate the second bandwidth to the ONU optical network unit during the detection phase includes:
1. Considering that it is relatively easy to detect the service data length L and count the number of service data (only the received complete service data itself needs to be parsed to obtain the information), the OLT optical line terminal has no special requirements for the allocation of the second bandwidth when detecting the service data length L and counting the number of service data.
2. Considering that in the detection of the service data transmission position tx and the service data period T, the detection of the service data period T depends on the accurate identification of the transmission location tx. Therefore, based on whether there is idle data "idle" before the service data in the uplink burst, the aforementioned second case (2) and third case (3) may occur. The second bandwidth allocated by the OLT optical line terminal to the ONU optical network unit should be used as much as possible for detecting the service data transmission location tx, that is, the second bandwidth is as large as possible to speed up the detection process. In addition, the second bandwidth can be distributed in a dispersed manner, for example, the second bandwidth is distributed m times to the ONU optical network unit at every preset duration (125 microseconds), and if the second bandwidth is large, m can be larger, otherwise m can be smaller (by changing the size of m, the probability of hitting the second case (2) and the third case (3) can also be improved). Or, the second bandwidth can also be distributed centrally, that is, when the possible transmission location of the service data has been estimated, the second bandwidth is distributed centrally to the ONU optical network unit at the transmission location (this can also improve the probability of hitting the second case (2) and the third case (3)).

In some feasible embodiments, a certain service data received by the OLT optical line terminal during the detection phase may conflict with other services (upstream periodic service to which the non-service data belongs). At this time, the OLT optical line terminal determines the transmission location information t*i of the service data based on the detection of the first case (1) above, compared with the actual transmission location tx of the service data, the transmission location t*i is delayed and inaccurate. However, the OLT optical line terminal can still estimate the service data period T* based on the first case (1), that is, T*=(t*2-t*1)/(n+1). Since t*2 and t*1 are both delayed, the relationship between T* and the actual service data period T is uncertain, but the larger n is, the closer T* is to T.

Based on this, when the OLT optical line terminal has obtained the precise initial position information, it can try to determine the subsequent position information based on the roughly estimated service data period T*. After the precise initial position, the OLT optical line terminal can adjust the second bandwidth allocated to the ONU optical network unit, that is, find a rough position, and allocate a large bandwidth to the ONU optical network unit before and after the rough location, or allocate several small bandwidths to the ONU optical network unit before and after the rough location.

In addition, embodiments of the present application further provide a bandwidth allocation apparatus. The bandwidth allocation apparatus provided herein is applied to an optical line terminal in a passive optical network. Referring to FIG. 9, the bandwidth allocation apparatus provided herein includes:
a data detection module 10 configured to detect service data characteristics of an upstream periodic service in the passive optical network; the service data characteristics includes at least a service data packet length and a service data period; and
a bandwidth allocation module 20 configured to allocate a first bandwidth with a length not less than the service data packet length to an optical network unit in the passive optical network according to the service data period, to allow the optical network unit forward service data of the upstream periodic service via the first bandwidth.

In an embodiment, the service data characteristics further include a data arrival time, and the bandwidth allocation module 20 is further configured for allocating the first bandwidth to the optical network unit according to the service data period at a time T prior to the data arrival time.

In an embodiment, the data arrival time includes: a first arrival time in response to the optical line terminal receiving the service data, or a second arrival time in response to the service data arriving at the optical network unit, and the time T includes time T0 and time T1. The bandwidth allocation module 20 is further configured for allocating the first bandwidth to the optical network unit at the time T0 before the first arrival time, or allocating the first bandwidth to the optical network unit at the time T1 before the second arrival time. The time T0 is equal to the sum of the T1 time and data transmission duration between the optical line terminal and the optical network unit.

In an embodiment, the data detection module 10 includes:
a detection bandwidth allocation unit configured for allocating a second bandwidth to the optical network unit in the passive optical network;
a burst receiving unit configured for receiving an uplink burst sent by the optical network unit via the second bandwidth; and
a burst data detection unit configured for determining the service data characteristics according to the service data of the uplink periodic service carried in the uplink burst.

In an embodiment, the data detection module 10 further includes:
a data parsing unit configured for parsing the service data to determine the service data packet length of the service data, and obtaining a number of service data of the service data received;
an idle data detection unit configured for detecting whether there is idle data preceding the service data in the uplink burst;
a data position detection unit configured for, in response to detecting the idle data, determining at least two first arrival times according to the idle data, or determining at least two second arrival times according to the idle data; and
a period calculation unit configured for determining the service data period of the service data according to the number of service data and the two first arrival times, or determining the service data period of the service data according to the number of service data and the two second arrival times.

In an embodiment, the data detection module 10 is further configured for, in response to that the service data carried in the uplink burst is detected to be incomplete, combining the uplink burst with a newly received uplink burst; and determining the number of service data and the service data packet length according to the service data carried in the combined uplink burst.

In an embodiment, the detection bandwidth allocation unit is further configured for allocating the second bandwidth to the optical network unit multiple times within a preset duration; or allocating the second bandwidth to the optical network unit at a preset location centrally.

The bandwidth allocation apparatus provided in this embodiment of the present application utilizes the bandwidth allocation method described in the above embodiment to address the technical issue of related art's inability to rapidly track transitions and reduce noise while taking into account varying signal-to-noise ratios. Compared to related art, the bandwidth allocation apparatus provided in this embodiment of the present application has the same beneficial effects as the bandwidth allocation method described in the above embodiment, and other technical features of the bandwidth allocation apparatus are the same as those disclosed in the above embodiment and are not further described here.

In addition, this embodiment of the present application also provides a communications device including: the bandwidth allocation apparatus described above, a memory, a processor, and a computer program stored in the memory and executable on the processor, the computer program configured to implement the steps of the bandwidth allocation method described above.

In addition, an embodiment of the present application further provides a storage medium, which is a computer-readable storage medium and stores a computer program. When the computer program is executed by a processor, the steps of the bandwidth allocation method described above are implemented.

In this article, the terms "comprise", "include" or any other variation thereof are intended to cover a non-exclusive inclusion, such that a process, method, article or system that includes a list of elements not only includes those elements, but also includes other elements not expressly listed, or also includes elements inherent to the process, method, article or system. In a case of without further restrictions, an element defined by the statement "includes a/an......" does not exclude the existence of other identical elements in a process, method, article or system that includes this element.

By the above description of the embodiments, those skilled in the art can clearly understand that the methods of the above embodiments can be implemented by means of software plus the necessary general hardware platform, and they can also be done by hardware certainly, but in many cases the former is the better implementation. Based on this understanding, the technical solution of the present application essentially or the part that contributes to the related art can be embodied in the form of a software product, the computer software product is stored in a storage medium (such as ROM/RAM (Read Only Memory/Random Access Memory), diskette, optical disk), which includes several instructions to cause a terminal device (which can be a mobile phone, computer, server, or network device, etc.) to execute the methods described in various embodiments of the present application.

The above are only some embodiments of the present application, and are not intended to limit the scope of the present application. Under the concept of the present application, any equivalent structure transformation made by using the description and accompanying drawings of the present application, or directly or indirectly applied in other related technical fields, is included within the scope of the present application.

## Claims

1. A bandwidth allocation method, applied to an optical line terminal in a passive optical network, **characterized by** comprising:
detecting service data characteristics of an upstream periodic service in the passive optical network; wherein the service data characteristics comprises at least a service data packet length and a service data period; and
allocating a first bandwidth with a length not less than the service data packet length to an optical network unit in the passive optical network according to the service data period, to allow the optical network unit forward service data of the upstream periodic service via the first bandwidth.

2. The bandwidth allocation method according to claim 1, wherein the service data characteristics further comprise a data arrival time, and the allocating the first bandwidth to the optical network unit according to the service data period comprises:
allocating the first bandwidth to the optical network unit according to the service data period at a time T prior to the data arrival time.

3. The bandwidth allocation method according to claim 2, wherein the data arrival time comprises: a first arrival time in response to the optical line terminal receiving the service data, or a second arrival time in response to the service data arriving at the optical network unit, and the time T comprises time T0 and time T1;
the allocating the first bandwidth to the optical network unit at the time T prior to the data arrival time comprises:
allocating the first bandwidth to the optical network unit at the time T0 before the first arrival time, or allocating the first bandwidth to the optical network unit at the time T1 before the second arrival time, wherein the time T0 is equal to sum of the T1 time and a data transmission duration between the optical line terminal and the optical network unit.

4. The bandwidth allocation method according to any one of claims 1 to 3, wherein the detecting the service data characteristics of the upstream periodic service in the passive optical network comprises:
allocating a second bandwidth to the optical network unit in the passive optical network;
receiving an uplink burst sent by the optical network unit via the second bandwidth; and
determining the service data characteristics according to the service data of the uplink periodic service carried in the uplink burst.

5. The bandwidth allocation method according to claim 4, wherein the service data characteristics further comprise: a first arrival time in response to the optical line terminal receiving the service data, or a second arrival time in response to the service data arriving at the optical network unit;
the determining the service data characteristics according to the service data carried in the uplink burst comprises:
parsing the service data to determine the service data packet length of the service data, and obtaining a number of service data of the service data received;
detecting whether there is idle data preceding the service data in the uplink burst;
in response to detecting the idle data, determining at least two first arrival times according to the idle data, or determining at least two second arrival times according to the idle data; and
determining the service data period of the service data according to the number of service data and the two first arrival times, or determining the service data period of the service data according to the number of service data and the two second arrival times.

6. The bandwidth allocation method according to claim 5, further comprising:
in response to that the service data carried in the uplink burst is detected to be incomplete, combining the uplink burst with a newly received uplink burst; and
determining the number of service data and the service data packet length according to the service data carried in the combined uplink burst.

7. The bandwidth allocation method according to claim 4, wherein the allocating the second bandwidth to the optical network unit comprises:
allocating the second bandwidth to the optical network unit multiple times within a preset duration; or
allocating the second bandwidth to the optical network unit at a preset location centrally.

8. A bandwidth allocation apparatus, applied to an optical line terminal in a passive optical network, **characterized by** comprising:
a data detection module configured to detect service data characteristics of an upstream periodic service in the passive optical network; wherein the service data characteristics comprises at least a service data packet length and a service data period; and
a bandwidth allocation module configured to allocate a first bandwidth with a length not less than the service data packet length to an optical network unit in the passive optical network according to the service data period, to allow the optical network unit forward service data of the upstream periodic service via the first bandwidth.

9. A communication device, **characterized by** comprising: the bandwidth allocation apparatus according to claim 8, a memory, a processor, and a computer program stored in the memory and executable on the processor, wherein the computer program is configured to implement the bandwidth allocation method according to any one of claims 1 to 7.

10. A storage medium, **characterized in that** the storage medium is a computer-readable storage medium, a computer program is stored on the storage medium, and the bandwidth allocation method according to any one of claims 1 to 7 is implemented when the computer program is executed by a processor.
